# EUROPEAN PATENT APPLICATION

(11) **EP 2 086 254 A2**
(43) Date of publication of application: **05.08.2009**
(21) Application number: 08105835.6
(22) Date of filing: 20.11.2008
(51) Int. Cl.: H04W 12/08, H04L 29/06, G06Q 30/00, H04L 29/08

(54) **System and method for Internet advertising content through a secure or unsecure connection**

(30) Priority: 21.11.2007 RO 200700805
(71) Applicant: Atlas Networking SRL, 022159 Bucharest (RO)
(72) Inventor: Onciu, Alex-Gabriel ATLAS NETWORKING SRL, Bucharest (RO); Vranceanu, Alexandru-Vlad ATLAS NETWORKING SRL, Mizil (RO); Nita, Cornel-Cosmin ATLAS NETWORKING SRL, Mizil (RO)
(74) Representative: Vasilescu, Raluca

(57) **Abstract**

The invention refers to a system and a method to display diverse advertising content through an Internet connection. According to the invention, the system comprises three main subsystems (A, B and C): the data center, the wireless hot-spot and the servers that host websites, all are interconnected through a data transport network like the Internet, the subsystem (A) represents the data center that has at least one Authentication and Cryptography Server System (111) used to provide the user with the authentication data which are the digital certificates automatically generated by it; to verify the certificate's authenticity when the user connects to the Internet and to secure the making and maintaining of an encrypted connection, the Authentication and Cryptography Server System (111) is interconnected through a data transport network with at least an Ad Server (112) that supports the provision of the information used to display the ads to the user, to access the Internet within the coverage area of a subsystem (A), representing the hot-spot, the later comprising at least one user terminal (14n) connected to the Internet on a secure or unsecure connection, depending on the user's choice, at least one WAP equipment (121) for an unsecured connection and at least one WAP equipment (122) for a secured connection. The method in accordance with the invention consists in that at first use by an user the system connects the user terminal to a WAP through an unsecure connection, then the following take place: the user selects the secured connection type and receives the digital certificates, the user is connected to the hot-spot subsystem and the connection is secured, the http sessions are manipulated to allow the user to view the advertising content.

## Description

This invention relates generally to data communications through waves (Wireless Communications) and in particular to a system and method of displaying Internet advertising content through a secure or unsecure wireless connection.

Users who have a device equipped with a Wi-Fi compatible mobile adapter, such as a mobile personal computer (laptop), a PDA, a Smart Phone, a PSP, etc., are able to surf the Internet using a hot-spot which is known as functional by using one or more devices able to emit, receive and reroute Wireless signal (Wireless Access Points, WAPs from now on). WAPs are communication equipments for data transmission in accordance with technical standards and regulations.

Public Hot-spot's are usually configured having an unsecure or open system of data transmission between WAPs and user(s). An unsecure or open system is characterized by total lack of security and data protection. Any user who has average knowledge with this field can intercept the data flow that users generate and can use data intercepted data in various ways. Hence one of the causes for which data connections based on the standards in force are regarded as unsafe. Hence one of the technical issues this invention addresses is securing the connection.

Wireless Internet Service Providers (from now on WISPs) managing hot-spot sites face the question of providing a means of charging users for using the wireless connection. The charge involves the execution of complex operations to authenticate the user, implying usually the existence of data support such as cards, and time management programs for the connectivity, the entire system being so ponderous and discourages the provision of service.

This charge raises operating and availability difficulties for users interested in using a wireless connection, making them dependent on purchasing the above-mentioned (cards) at retention of reach.

Finally, it is known that most Internet pages include advertising messages. Currently, within the hot-spot coverage area the display ads are only disposed through an unsecured system. In addition, the displaying of ads with Internet pages does not take into account the potential beneficiaries by their geographical location, but are generally displayed dependent on the websites they are integrated. In this way, a message advertising a product only available in a certain area will be viewed by other users in other areas for which the product is not available for purchase.

The U.S. 2006/0059043 A1 and U.S. 2006/0059044 A1 patents show a way to conduct hot-spot sites with support for ads.

The present invention has a system and a method that resolves the deficiencies of the lack of secure wireless connection (1) and those related to the management of users who use the connection to the Internet via a wireless hot-spot (2) and those related to efficient ads arrangement with the navigation software on the Internet (3).

The present invention enables secure connections to the Internet through the wireless user's request; the user can choose to have a secure or unsecure connection.

The present invention allows better targeting the ads so that they are more dependent on the area where the user is accessing the Internet than on the website the user is browsing. However, the system can also offer the possibility to display advertising based on the website that Internet users navigate.

The present invention enables the efficient viewing of ads inserted so that they are not aggressive. The display of advertising content is carried out within a frame of varying sizes (for example, used the height of 70 pixels) displayed on top of each web site that the user navigates. Also, the display of advertising content can be set within a context tooltip enabled at mouse rollover and on certain keywords in the websites visited by users, keywords that are previously defined through an AdServer (112).
Figure 1 shows the system according to the invention.
Figure 2 shows a logical layout of the process leading the user to surf the Internet within the coverage of a hot-spot with support to display ads.
Figure 3 shows how to display ads to the user while he uses a secure or unsecure connection to access the Internet within the coverage of hot-spot area.

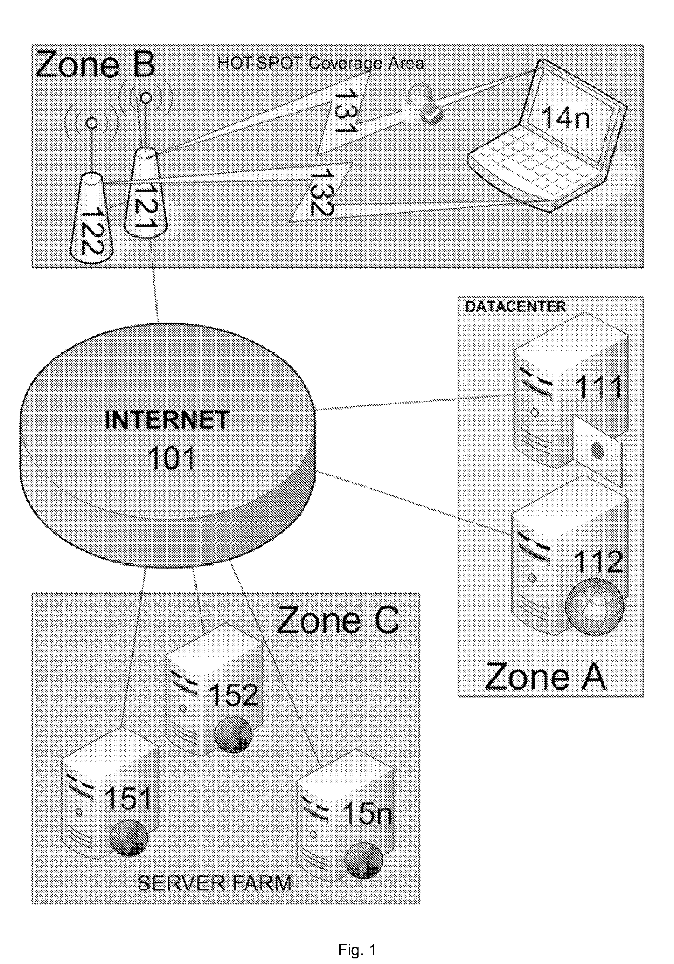

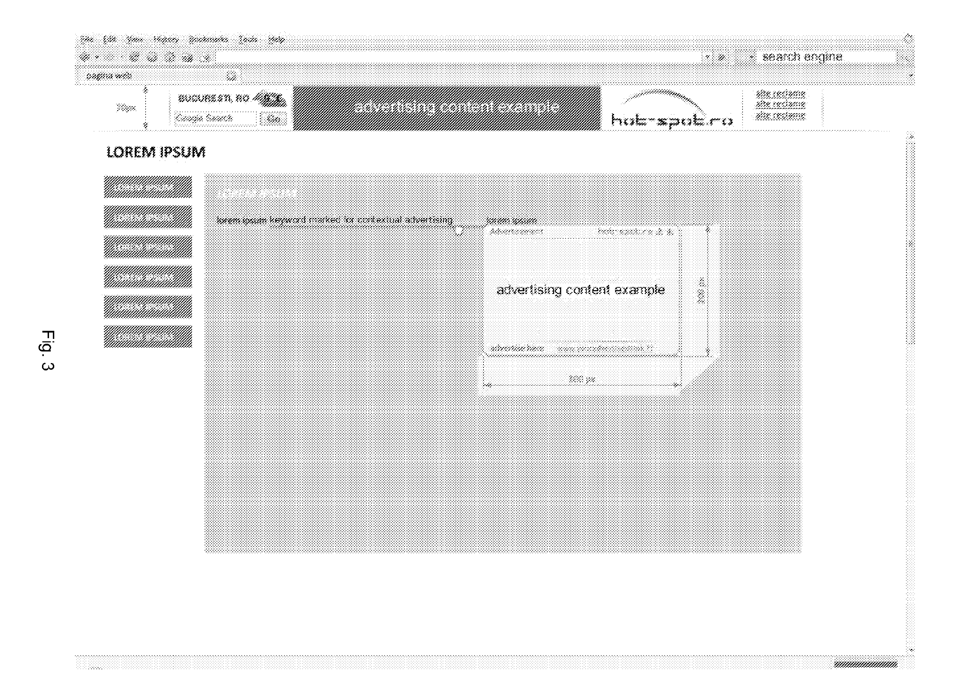

Under the present invention we disclose a system architecture that uses the Internet as a means of transport to provide Wi-Fi hot-spot areas with ads support using a secure or unsecure connection scheme for the user to browse the Internet. The system includes but is not limited to 3 main zones, Zone A, B and C, interconnected via the Internet as follows:
Zone A is the data center equipped with: an Authentication and Cryptography Server System (111) and an AdServer (112). The two servers are the core needed to display ads while the user uses a secure or unsecure connection for Internet access in the coverage area of a hot-spot (Zone B - hot-spot.ro).
   111 is the Authentication and Cryptography Server System used to provide user authentication data in the form of digital certificates generated automatically by the server system. Certificates are used to authenticate the user in any location where it is hot-spot is implemented providing encrypted connection in accordance with the IEEE 802.11i standard and Extendible Authentication Protocol - The Transportation Security (Extensible Authentication Protocol - Transport Layer Security, here over EAP-TLS) RFC 2716 - model.
   112 is the Ad Server located in Zone A, but with the possibility of location anywhere on the Internet (101). It is used to display advertising content (Figure 3) to end users who browse the Internet within the coverage of a hot-spot (Zone B - hot-spot.ro). The displayed advertising content is determined by the user's geographical location; the user once connected to the system receives from WAPs (WAP 121 - open.hot-spot.ro or WAP 122 - secure.hot-spot.ro) the available ads for that location via the Ads Server. Also, the Ads Server can interpret some features of the browsing session(s) that the end user produces, in order to display advertising in relation with user's Internet behavior. Other types of advertising content concentration are possible, such as display ads based on: platform, operating system, connection type, the type of program for browsing the Internet (browser), language, etc.
Zone B - hot-spot.ro designates the coverage of hot-spot area and the need equipment for its functioning. WAPs (WAP 121 - open.hot-spot.ro or WAP 122 - secure.hot-spot.ro) are used to provide user coverage for Wi-Fi Internet access and manipulate HTTP sessions so that the ads are displayed. WAPs (WAP 121 - open.hot-spot.ro or WAP 122 - secure.hot-spot.ro) are interconnected by a software switch hosted on one of them and also connected to the Internet with any third party Internet Service Provider (ISP from now on). Devices that can connect to WAPs (WAP 121 - open.hot-spot.ro or WAP 122 - secure.hot-spot.ro) are equipped with integrated or external wireless adapter and are highlighted in Figure 1 as 14n, thus being any type of client device but not limited to laptop, PDA, PSP, phone.
Zone C (151, 152, 15N) designates the sum of all the servers that host websites that are accessed by users within the coverage area of a hot-spot under Zone A. Any website visited by the user(s) is stored on a server (151, 152, 15N) providing access to various types of content such as but not limited to text, images, animations. Thus, when a user enters an address such as but not limited to http://www.example.com a server (15N) is called and returns on the user's device screen (14n) content such as but not limited to text, images, animations, while being within the coverage area of the hot-spot. Under the present invention we introduce a method of display advertising content via a wireless Internet connection showing initial user choice between a secure and an unsecure connection.

### Deployment example:

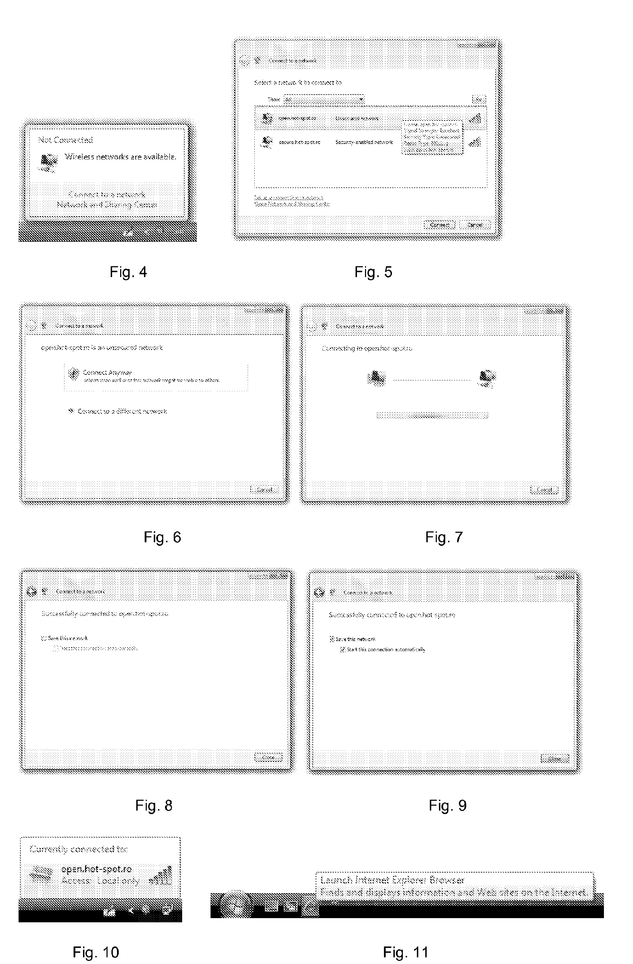

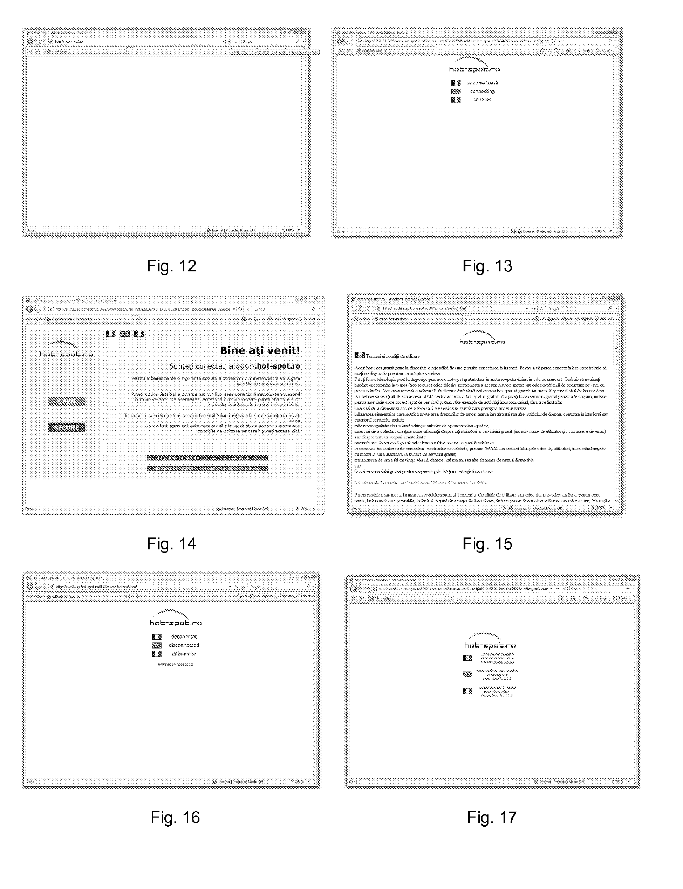

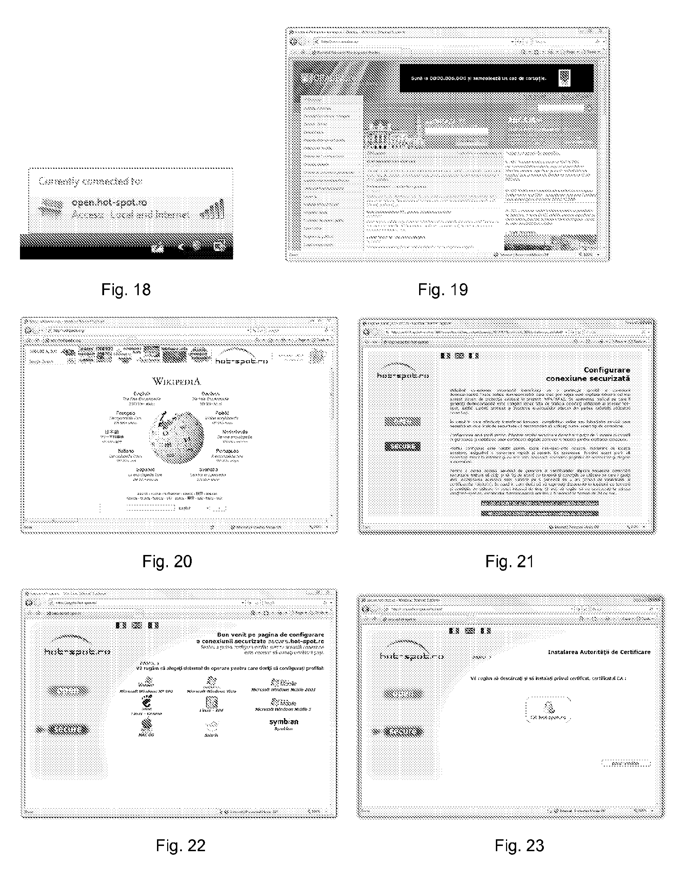

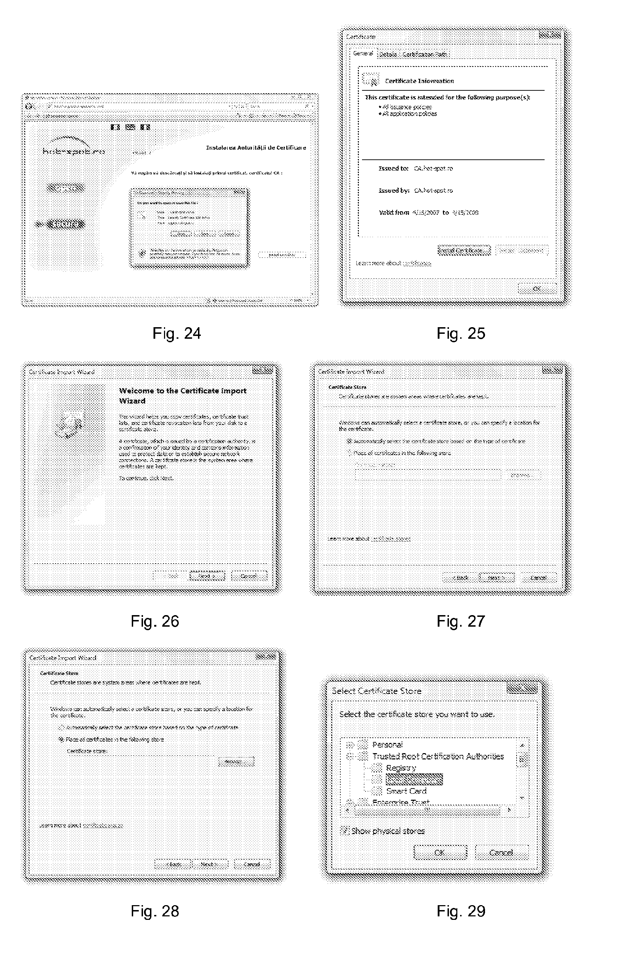

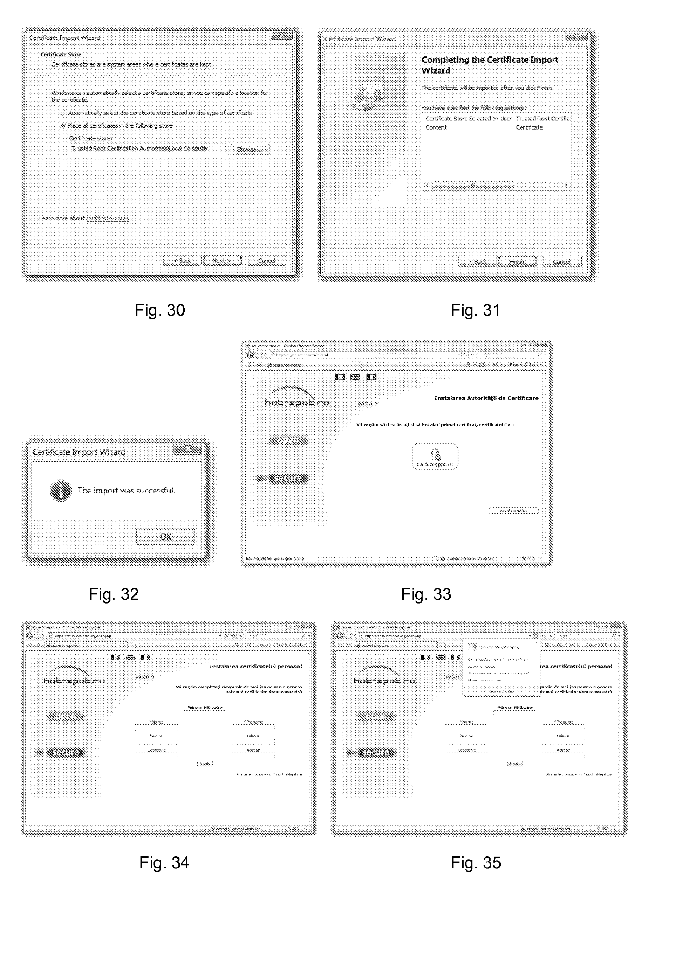

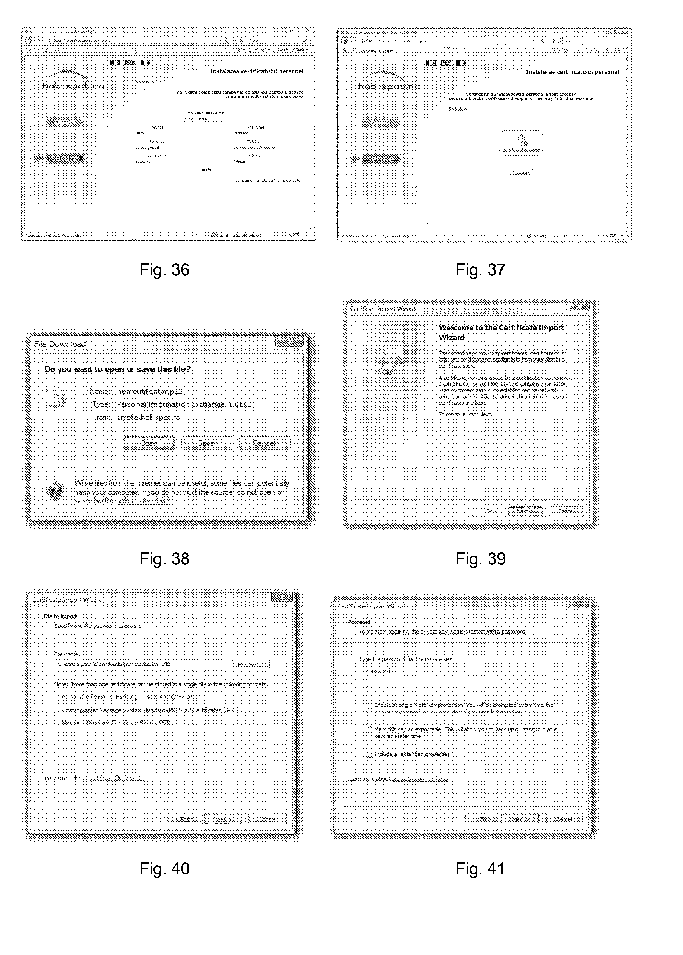

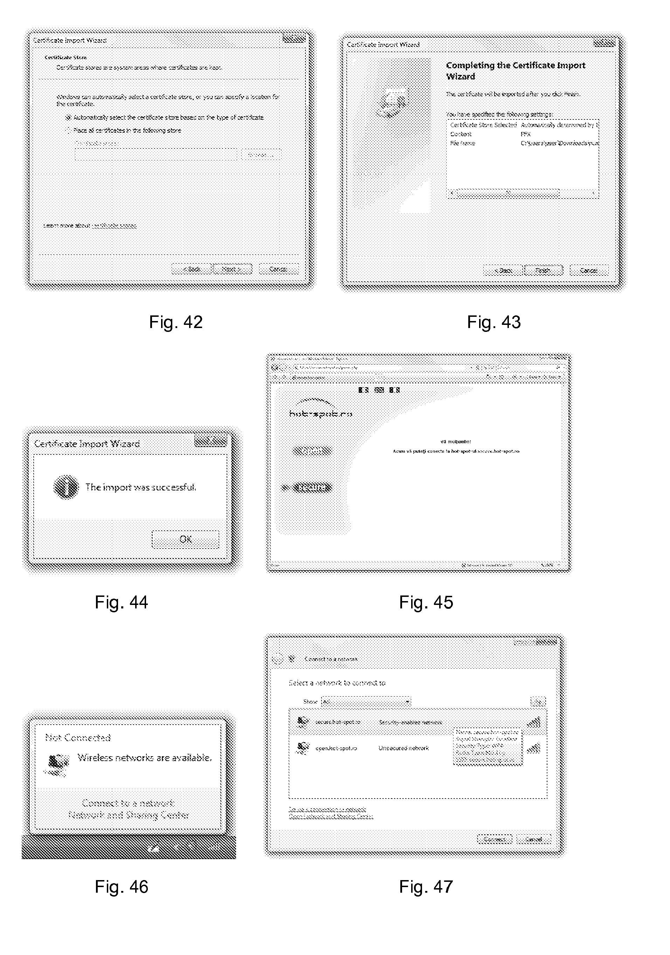

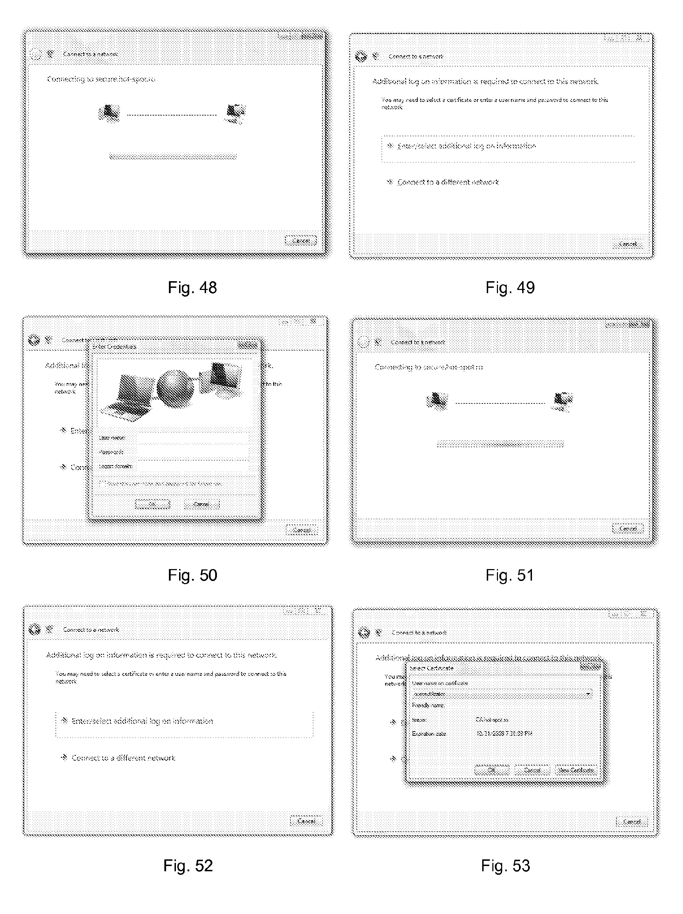

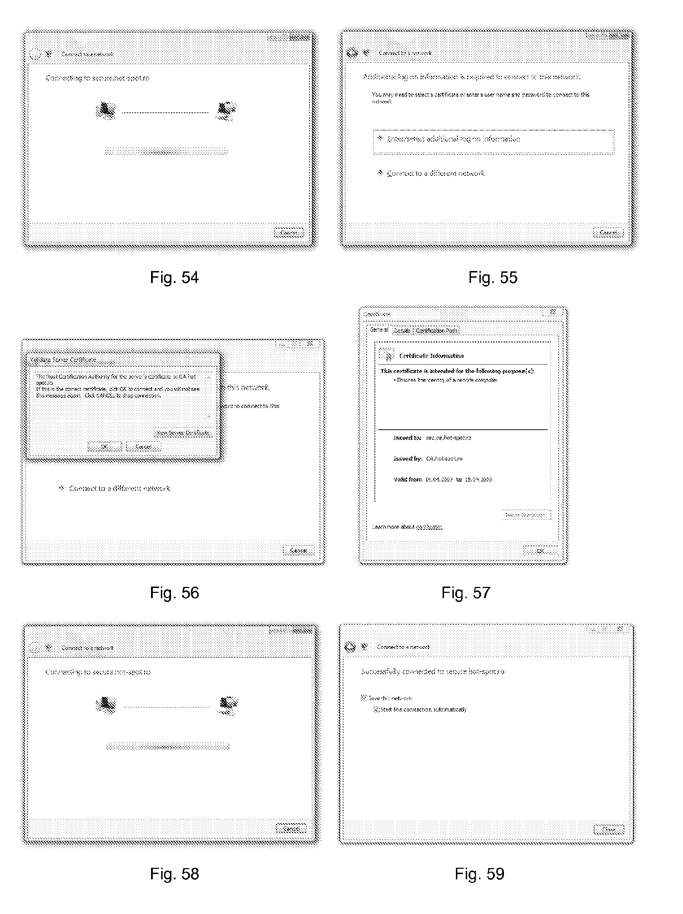

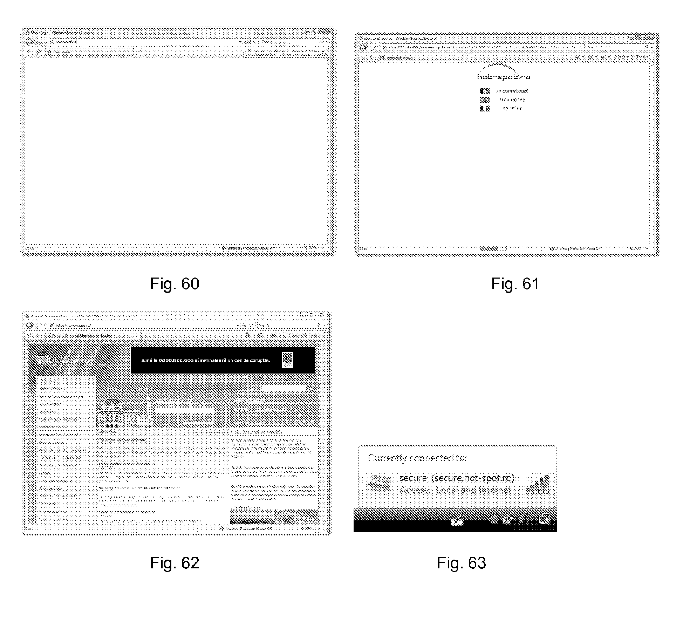

1. Connecting the user to the hot-spot.ro system (WAP 122 - open.hot-spot.ro) - stage 1.
1.1. First the user checks whether he is in the coverage area of the hot-spot.ro (Zone B) [Fig. 4].
1.2. The user checks the radio signal and selects the option of connecting to the open.hot-spot.ro network (WAP 122) [Fig. 5].
1.3. The operating system on the user's device is one like but not limited to Windows Vista, system that warns the user of low degree of data security in this type of network. The user selects "Connect anyway" to continue [Fig. 6].
1.4. The open.hot-spot.ro (WAP 122) assigns the user a private IP address like but not limited to 10.11.12.13. WAP 122 (open.hot-spot.ro) assigns the user a private IP address that allows communication between the device that the user uses and WAP 122 (open.hot-spot.ro) [Fig. 7].
1.5. After the successful allocation of private IP address of your message to confirm the connection to WAP 122 (open.hot-spot.ro) [Fig. 8].
1.6. The user can save settings to ensure later automatic connection [Fig. 9].
1.7. The operating system displays the dialog that announces that this time the user access is limited. This means that at this time there is no link to the Internet (101) but only a link between the 14n device and WAP 122 (open.hot-spot.ro) [Fig. 10].
1.8. To continue the connection process it is required to open a program for browsing the Internet (Web browser), the default with Windows Vista is Internet Explorer [Fig. 11].
1.9. The user types a certain address in order to call a Web page hosted on a server 15n, we chose www.mcti.ro only as an example [Fig. 12].
1.10. The user is redirected to the welcome page [Fig. 13]. This page is displayed and hosted by the WAP 122 (open.hot-spot.ro). This page contains JavaScript machine code instructions and browser requests designed to collect data about the platform and software used by the user in order to display the correct interface of interaction with the user and for statistical purposes. After a time of 5 seconds, the user browser will be automatically redirected to the page where you can choose the connection type (open or secure) and the agreement on the type of use.
1.11. WAP 122 (open.hot-spot.ro) displays a page where the connection options are presented with multilingual support. Respectively connect to the Internet through an OPEN (WAP 122 - open.hot-spot.ro) or SECURE (WAP 121 - secure.hot-spot.ro) connection. At this point the user is already logged on OPEN connection type, but may choose to use the SECURE connection type. Also, the user can choose whether or not agree with the terms and conditions of use of the hot-spot.ro [Fig. 14]. This page, like the other pages that are present with the user interface either on the OPEN or SECURE section, is served to the user's device by WAP 122 (open.hot-spot.ro) through a virtual server that functions as a its service till the button "I have read and agree to the terms and conditions" is clicked.
1.12. Before the user expresses agreement, the user can access the terms of service with the hot-spot.ro (Zone B) [Fig. 15].
1.13. If the user does not agree with the terms of service, the connection is interrupted. [Fig. 16].
2. The system presents connection options: unsecured connection (WAP 122 - open.hot-spot.ro) and secured connection (WAP 121 - secure.hot-spot.ro) - stage 2.
2.1. In the event that the user chooses to remain op the OPEN connection type (WAP 122 - open.hot-spot.ro), the unsecure connection, the steps to surfing the Internet (101) are as follows:
2.1.1. The user, after accepting the terms of service, can have access to Internet surfing (101) through WAP 122 (open.hot-spot.ro). [Fig. 17].
2.1.2. Because the user can access the Internet (101) WAP 122 (open.hot-spot.ro) cancels the connection limit. [Fig. 18]. To cancel the limitation and grant access to the Internet WAP 122 (open.hot-spot.ro) adds a route to the Internet (101) for the IP address assigned to previously to the user.
2.1.3. Thereafter the user will be redirected to a portal (the address is internally configured with hot-spot.ro system). As an example we choose the Mayor of Oradea portal, the system allows redirection to any portal that provides useful information related to the location where the hot-spot.ro system is installed [Fig. 19]. However, the system can hold the website that the user intended to access originally (in our example www.mcti.ro) illustrated by [Fig. 12].
2.1.4. The user can surf the Internet (101), all requests to a server in Zone C (15N) and communications sessions established with these servers are handled by the WAP 122 (open.hot-spot.ro) to insert advertising content. Thus, if the user requests to visit the www.wikipedia.org [Fig. 20], this claim is handled by the WAP 122 (open.hot-spot.ro) so that:
2.1.4.1. WAP 122 (open.hot-spot.ro) amends the source code of the page displayed to insert a frame of variable size, located but not limited to a location, at the top of the website page (Document Object Model or DOM manipulation), the inserted frame is limited to the content of web pages from Zone C with the purpose of distinguishing between it (the frame) and the user accessed webpage, the inserted frame hosts advertising content in relation with the user location, the type of connection used (open or secure), the page the user visits, the device used for navigation, the platform used, the resolution used, the size of the window or the language of the operating system. The advertising content within the inserted frame is brought about through AdServer (112). Each WAP part of the system has allocated an area of database stored with the AdServer (112) so that the ads shown with each WAP part of the system to be customized in real time.
2.1.4.2 WAP 122 (open.hot-spot.ro) amends the source code of the page to prevent incorrect reads of the advertising content from the advertisement frame (such as but not limited to problems of "cross-site scripting").
2.1.4.3. In case an advertising keyword is spotted, the AdServer (112) starts inserting code to highlight that keyword by color and underline (DOM manipulation) (Figure 3). This highlight is done by changing the source code of the page and inserting a span tag which includes both the coloring and underlining code to color and underline the keyword and the code for displaying an advertising tooltip at mouse rollover the keyword, the advertising content is also served by the AdServer (112).
2.1.4.4. WAP 122 (open.hot-spot.ro) reads and analyzes the content and the encoded information (e.g. headers) for each page the user accesses in order to insert advertising content relying on creating a report of keywords, script content and structure, report that is confronted with the database hosted with the AdServer (112); as a confrontation result WAP 122 (open.hot-spot.ro) may decide to insert, not to insert or to partially insert advertising content to certain pages. This analysis is intended to prevent display with certain pages known to be incompatible with the advertising content sequence code. Also, the system can make marketing decisions of this kind to avoid the disposal of directly competing advertising content with the web page accessed / viewed by the user.
2.1.4.5. To make the insertion of advertising content WAP 122 (open.hot-spot.ro) uses an internal transparent proxy passing through all the pages accessed by users. The proxy analyzes the content to insert JavaScript code type, but not limited to this type, depending on the page. Further, this sequence of code is executed in the browser user interface and built by a method called DOM manipulation, composed page (the frameset). This set of links frame (frameset over here) contains first frame with a sequence of HTML code that relies on the mechanism of cross-disposal Ads (112) that generates the parameters depending on the content you receive your frame predefined size and the other in a frame that displays the web page accessed by the user. Also, the contents of the frame that displays the web page accessed by a user can manipulate using JavaScript code type, but not limited to this, so that certain keywords are highlighted and to shift the cursor in the area where they are displayed can be run certain sequences that code but are not limited to display ad content. All advertising content itself is stored, but are not limited in this way, the cross-system layout Ads (112), including images or frame delineation tooltip. Advertising content can be stored and from external sources or Area C. Area B (WAPs). The content of the advertising hot-spot.ro system is assembled by cross-disposal Ads (112) for each application separately (for each web page display in Zone C) in the invocation of the code that you send WAP 122 (open . spot.ro hot) code that contains information for the cross-disposal Ads (112), the assembly procedure. However, for certain portions fluidized traffic advertising content that is accessed frequently can be stored and served by the WAP 122 (open.hot-spot.ro) memory buffer (buffer, cache) for rapid display.
2.2. In the event the user selects SECURE (WAP 122 - secure.hot-spot.ro), secure connection, the steps to surfing the Internet (101) are as follows:
2.2.1. The user must accept the terms and conditions and will be given access to the Internet (101) [Fig. 21]. This page is served by WAP 122 (open.hot-spot.ro) to the User through a virtual server that functions as a service of it. Note that if the user has already executed the data transfer over the internet through the OPEN connection type (WAP 122 - open.hot-spot.ro) he can access the page containing the selection of the connection type using the Internet browser to surf to http://1.1.1.1 or http://exit, http://iogout. This page is also served by WAP User 122 (open.hot-spot.ro) through a virtual server that functions as a service of it. The acceptance of the terms of service that engages the installation of authentication digital certificates will only be done once, and used as a means of authentication everywhere a hot-spot.ro system is present and running.
2.2.2. Thereafter the user will be redirected to the configuration interface for the secure connection, page served by Server System of Authentication and Cryptography (111). From here the user must follow these steps:
2.2.2.1. Choosing the operating system [Fig. 22] (the digital certificates to be generated meet same structure for all operating systems but installation procedure and the compatible extensions for each operating system in part may vary): the user chooses the appropriate operating system for configuration. In case the user chooses, but is not limited to using the operating system Microsoft Windows Vista.
2.2.2.2. After choosing the operating system the user must download and install the digital certificate for the Certification Authority [Fig. 23]. The next step entails that the user accessed by mouse click the web link image "CA.hot-spot.ro", resulting in user's query to accept the download and installation of the certificate authority stored on Authentication and Cryptography Server System (111) [Fig. 24]. When clicking on Open the user is presented with a window through which the operating system displays origin information and validity for the authority certificate about to be installed [Fig. 25]. At click on the installation certificate the user has access to a guide (wizard from now on) to import certificate, which shows in the first instance usefulness information about the certificate [Fig. 26]. The Certificate Authority CA.hot-spot.ro is useful for ensuring mutual user identity from the hot-spot.ro system, acting as an encryption catalyst for the connection between the user's device (14n) and WAP 121 (secure.hot-spot.ro). At click on Next the user can select the location where the certificate of authority is to be installed [Fig. 27], the default selected location with Microsoft Windows Vista operating system is automatically given. Only with this operating system is necessary to specify the exact location where the certificate of authority is to be installed, with other operating systems the location where the certificate of authority will be installed is automatically determined. Thereafter the user can click the browse button to determine the exact location of the certificate of authority to be installed [Fig. 28]. At click on Browse button the operating system displays a window with available locations, here the user has to select "Trusted Root Certification Authorities" and "Local Computer" to ensure the proper functioning in the hot-spot.ro [Fig. 29], the confirmation is done by clicking on the "OK" button. After confirming the location for installing the certificate of authority the operating system shows the previous window updating information on the installation location for the certificate of authority [Fig. 30]. After completion at Next click the operating system shows a window containing a summary of actions depending on the previously installed options. To complete the installation the user clicks on Finish [Fig. 31]. Running the presented steps successfully the operating system shows an acknowledgment of successful installation of the certificate of authority [Fig. 32]. Installing the digital certificate has as a result the addition of the Authentication and Cryptography Server System (111) with the list of certificate authorities on the user's operating system. Also, this certificate is used for mutual validation, the Authentication and Cryptography Server System must present a valid certificate of authentication, certificate related to the certification authority for the user authentication initiating the session. If and only if the certificate Authentication and Cryptography Server System (111) is valid, the user presents the personal digital certificate to authenticate and to initiate the secure connection. Thus, the procedure prevents the problem of presenting the personal certificate to a fake server through a WAP that is not part of the system and used for data theft. The entire scheme of the procedure for the secure connection is in compliance with RFC 2716 "PPP EAP TLS Authentication Protocol" and can be viewed at http://tools.ietf.org/html/rfc2716.
2.2.2.3. After installing the certificate authority, at click on "next step" [Fig. 33], the page where the user must complete a form is shown [Fig. 34] to make an application to the Authentication and Cryptography Server System (111) that will generate a personal certificate to the user. Filling this form and making the application is made using a secure website Secure Socket Layer (SSL from now on) using the previously installed digital certificate authority, shown at click to view information about the secure connection [Fig. 35]. An example of form [Fig. 36] shows how the user completes the fields providing personal data which is sent using the SSL protocol to the Authentication and Cryptography Server System (111) by clicking on Send to generate the unique personal certificate for user. The system uses SSL to send the form and download the digital certificate in order to prevent data theft or compromise the digital certificate. At this time, when these steps occur the user is still using an unsecure wireless connection and the only way to make transmissions securely is using the SSL pages. If sending data has been performed successfully, the data is processed and stored with a database that is hosted on, but can not be limited to, the Authentication and Cryptography Server System (111). Data processing involves verifying the uniqueness of the chosen username completed by the user when filling the form. If the chosen username was linked to another user there can be generated no new digital certificate corresponding to the newly created identity, but a message displays that informs the user that the username is already chosen; the user has the possibility to choose another username with the username field. If the chosen username was not linked to another user the system creates a digital certificate corresponding to the newly created identity [Fig. 37].
2.2.2.4. The next step entails that the user accessed by clicking the "Personnel Certificate" linked image, the associated action is asking the user's to accept the download and installation of personal certificate stored on the Authentication and Cryptography Server System (111) [Fig. 38]. At click on the Save button the user selects the location where the username.p12 file containing personal certificate in PKCS # 12 formats will be saved. Although not limited to, the given example shows the folder available at "C:\Users\user\Downloads\" referring to the default location of the operating Microsoft Windows Vista system for downloading files using the Microsoft Internet Explorer 7 browser. At click on Open access is granted to a wizard to import the certificate, the wizard shows with the first instance information about the usefulness of the certificate [Fig. 39]. The Personal certificate is useful for ensuring the identity of the user to hot-spot.ro system acting as a catalyst for encrypting the connection between the device (14n) and WAP 121 (secure.hot-spot.ro). At click on Next to the user is asked to select the location where the digital certificate was downloaded, which is in this particular case "C:\Users\user\Downloads\ numeutilizator.p12 [Fig. 40]. Continuing to click Next the user must enter the password associated with the personal certificate and choose the way the cerificate will be managed and used [Fig. 41]. Although, to simplify the connection procedure, the system generates certificates without a personal password, the hot-spot.ro system allows generating personal digital certificates password protected, with the possibility of generating the password automaticly or by user's choice, without limitation to these methods. In this example, the default options are sufficient to ensure the installation or the location of the certificate of authority to be installed [Fig. 42]; the default selected value with the Microsoft Windows Vista operating system is the location given automatically. After completion at Next click the operating system shows a window containing a summary of actions depending on the previously installed options. To complete the installation the user clicks on Finish [Fig. 43]. Running the presented steps successfully the operating system shows an acknowledgment of successful installation of the personal certificate [Fig. 44]. Finally, the browser will display a page that can confirm the user to connect to WAP 121 (secure.hot-spot.ro) [Fig. 45]. The personal certificate, together with the certificate of authority for digital certification are used to create encrypted dynamic keys for the secure connection and the secure data transfer between the WAP 121 (secure.hot-spot.ro) and the device (14n) using the EAP TLS method. The entire secure connection scheme of the procedure is in accordance with RFC 2716 "PPP EAP TLS Authentication Protocol" and can be viewed at http://tools.ietf.org/html/rfc2716. To encrypt the dat traffic the system is using the above mentioned encryption keys through WPA or WPA2 protocol with the TKIP or AES-CCMP encryption method. The level of encryption (WPA or WPA2) is automatically chosen depending on the scope of the user's hardware automatically detected by WAP 121 (secure.hot-spot.ro).
2.3. After installing the two digital certificates, the user can connect to the hot-spot.ro system (WAP 121 - secure.hot-spot.ro), the connection being automatically secured through WPA or WPA2 protocol using the encryption keys from the two digital certificates.
2.3.1. First the user checks whether he is or not within the coverage of the hot-spot.ro system (Zone B) [Fig. 46].
2.3.2. The user checks the radio signal and selects the option of connecting to the network secure.hot-spot.ro (WAP 121) [Fig. 47].
2.3.3. The operating system running on the user's device (14n) initializes the wireless connection between the user's device (14n) and the WAP121 (secure.hot-spot.ro) establishing the secure communication protocols based on the hardware wireless capabilities of the adapter installed on the user's device (14n ) [Fig. 48]. The hot-spot.ro system is compatible with both TKIP (Temporal Key Integrity Protocol) and the AES-CCMP (Advanced Encryption System-Counter-Mode/CBC-MAC Protocol). The strongest encryption is performed using AES-CCMP, which is at hardware level; therefore it depends on the type of wireless adapter used by the user.
2.3.4. The operating system running on the user's device (14n) requires the introduction of user's authentication data to be processed by the Authentication and Cryptography Server System (111) [Fig. 49].
2.3.5. To facilitate the process of authenticating, the hot-spot.ro system does not use authentication based on username and password, but it can grant a username and password to be implemented by associating them with the personal certificate for each user; in this hypothetical case the Authentication and Cryptography Server System (111) would allocate this type of login. These fields are left empty and the user clicks OK to continue the process of connecting [Fig. 50].
2.3.6. Thereafter the system initializes the encrypted tunnel to verify through the Authentication and Cryptography Server System (111) the user's identity (the identity is the personal certificate) and WAP 121 (secure.hot-spot.ro) identity [Fig. 51].
2.3.7. The operating system running on the user's device (14n) requests the authentication data (the personal authentication certificate) to be processed by the Authentication and Cryptography Server System (111) [Fig. 52].
2.3.8. A window is displayed to the user for him to select the digital certificate that confirms his identity and that ensures the data protection flow throughout the using hot-spot.ro system (Zone B) [Fig. 53]. Once selected, the personal certificate displayes identification and validity data. At click on OK to select the certificate is being processed by the Authentication and Cryptography Server System (111).
2.3.9. The processing of the personal user certificate is performed by the Authentication and Cryptography Server System (111) by checking the digital signature and comparing it with the digital signature used by the Authentication and Cryptography Server System (111). Authentication and Cryptography Server System (111) verifies that the personal user certificate is authentic, valid and recognized by the certification authority [Fig. 54]. If the personal user certificate is not valid the Authentication and Cryptography Server System (111) rejects the authentication application initialized by the user, prompting the operating system running on the user's device (14n) to display the select authentication data page again to [Fig. 52].
2.3.10. The operating system running on the 14n user requests data authentication (personal authentication certificate) to be processed by the server System Authentication and Cryptography (111) [Fig. 55].
2.3.11. The operating system running on the user's device (14n) displays a dialog that warns the user about the certification authority used to generate the installed certificate on the Authentication and Cryptography Server System (111) [Fig. 56]. This server certificate provides the user the identity and the validity of the Authentication and Cryptography Server System (111) preventing man-in-the-middle attacks (the data flow moving between the user's device (14n) and the WAP 121 (secure.hot -spot.ro) towards Authentication and Cryptography Server System (111) is done directly, and not accessible to third parties, like other devices (14n), other WAPs, or other kind) through the mutual verification of the parties engaged with data protection.
2.3.12. On click at View Server Certificate, the operating system running on the user's device (14n) displays a window containing information about the Authentication and Cryptography Server System (111) digital certificate, providing server identity to the user [Fig. 57]. If the data is not authentic (the identity of the entity to which it was issued is not secure.hot-spot.ro and / or the identity of the issuer is not CA.hot-spot.ro) the user can choose to disconnect the WAP clicking the Cancel button with the previous window [Fig. 56], because security data is compromised.
2.3.13. If the data is correct and has successfully validated the identity of the user based on the personal certificate and the Authentication and Cryptography Server System (111) on the certificate of authority CA.hot-spot.ro, the authentication process is completed. The Authentication and Cryptography Server System (111) generates and distributes to WAP 121 (secure.hot-spot.ro) and to user's device (14n) wireless adapter the encryption keys for the data flow between them [Fig. 58]. WAP 121 (secure.hot-spot.ro) assigns the user a private IP address like but not limited to 10.11.12.13. This IP address allows private communication only between the user's device (14n) and WAP 121 (secure.hot-spot.ro).
2.3.14. The user can save settings to ensure later authomatic connection [Fig. 59].
2.3.15. To continue the connection process it is required to open a program for browsing the Internet (Web browser), the default in Windows Vista is Internet Explorer [Fig. 11]. Subsequently, the user types a certain web address in order to call a Web page hosted on a server 15n, as an example we chose www.mcti.ro [Fig. 60].
2.3.16. The user is redirected to the login page [Fig. 61]. This page is displayed and hosted by the WAP 121 (secure.hot-spot.ro). This page contains JavaScript code machine instructions and browser commands designed to collect data about the platform and software used by the user in order to display the correct interaction interface with the user and for statistical purposes. Also, WAP 121 (secure.hot-spot.ro) adds a route to the Internet (101) for the previously assigned user IP address.
2.3.17. After a time of 5 seconds the user browser will be redirected to a portal (address is internally configured with hot-spot.ro system). As an example we chose underline the keyword and the code for displaying an advertising tooltip at mouse rollover the keyword, the advertising content is also served by the AdServer (112).
2.4.4. WAP 121 (secure.hot-spot.ro) reads and analyzes the content and the encoded information (e.g. headers) for each page the user accesses in order to insert advertising content relying on creating a report of keywords, script content and structure, report that is confronted with the database hosted with the AdServer (112); as a confrontation result WAP 121 (secure.hot-spot.ro) may decide to insert, not to insert or to partially insert advertising content to certain pages. This analysis is intended to prevent display with certain pages known to be incompatible with the advertising content sequence code. Also, the system can make marketing decisions of this kind to avoid the disposal of directly competing advertising content with the web page accessed / viewed by the user.
2.4.5. To make the insertion of advertising content WAP 121 (secure.hot-spot.ro) uses an internal transparent proxy passing through all the pages accessed by users. The proxy analyzes the content to insert JavaScript code type, but not limited to this type, depending on the page. Further, this sequence of code is executed in the browser user interface and built by a method called DOM manipulation, composed page (the frameset). This set of links frame (frameset over here) contains first frame with a sequence of HTML code that relies on the mechanism of cross-disposal Ads (112) that generates the parameters depending on the content you receive your frame predefined size and the other in a frame that displays the web page accessed by the user. Also, the contents of the frame that displays the web page accessed by a user can manipulate using JavaScript code type, but not limited to this, so that certain keywords are highlighted and to shift the cursor in the area where they are displayed can be run certain sequences that code but are not limited to display ad content. All advertising content itself is stored, but are not limited in this way, the cross-system layout Ads (112), including images or frame delineation tooltip. Advertising content can be stored and from external sources or Area C. Area B (WAPs). The content of the advertising hot-spot.ro system is assembled by cross-disposal Ads (112) for each application separately (for each web page display in Zone C) in the invocation of the code that you send WAP 121 (secure.hot-spot.ro) code that contains information for the cross-disposal Ads (112), the assembly procedure. However, for certain portions fluidized traffic advertising the Mayor of Oradea portal, the system allowing redirection to any portal that provides useful information for the location where the hot-spot.ro system is installed [Fig. 62]. However, the system can hold the web site that the user intended to access the originally (in our example www.mcti.ro), intention illustrated by [Fig. 60] 2.3.18. The operating system displays the dialog announcing that from this point the user has Internet access (101) secured by WAP 121 (secure.hot-spot.ro) [Fig. 63].
2.4. The user can surf the Internet (101), all requests to a server in Zone C (15n) and communication sessions established by these servers are handled by the WAP 121 (secure.hot-spot.ro) to insert advertising content. Thus, if the user requests to visit www.wikipedia.org [Fig. 20], this request is handled by the WAP 121 (secure.hot-spot.ro) so that:
2.4.1. WAP 121 (secure.hot-spot.ro) amends the source code of the page displayed to insert a frame of variable size, located but not limited to a location, at the top of the website page (Document Object Model or DOM manipulation), the inserted frame is limited to the content of web pages from Zone C with the purpose of distinguishing between it (the frame) and the user accessed webpage, the inserted frame hosts advertising content in relation with the user location, the type of connection used (open or secure), the page the user visits, the device used for navigation, the platform used, the resolution used, the size of the window or the language of the operating system. The advertising content within the inserted frame is brought about through AdServer (112). Each WAP, part of the system, has allocated an area of database stored with the AdServer (112) so that the ads shown with each WAP, part of the system, to be customized in real time.
2.4.2. WAP 121 (secure.hot-spot.ro) amends the source code of the page to prevent incorrect reads of the advertising content from the advertisement frame (such as but not limited to problems of "cross-site scripting").
2.4.3. In case an advertising keyword is spotted, the AdServer (112) starts inserting code to highlight that keyword by color and underline (DOM manipulation) (Figure 3). This highlight is done by changing the source code of the page and inserting a span tag which includes both the coloring and underlining code to color and content that is accessed frequently can be stored and served by the WAP 121 (secure.hot-spot.ro) memory buffer (buffer, cache) for rapid display.

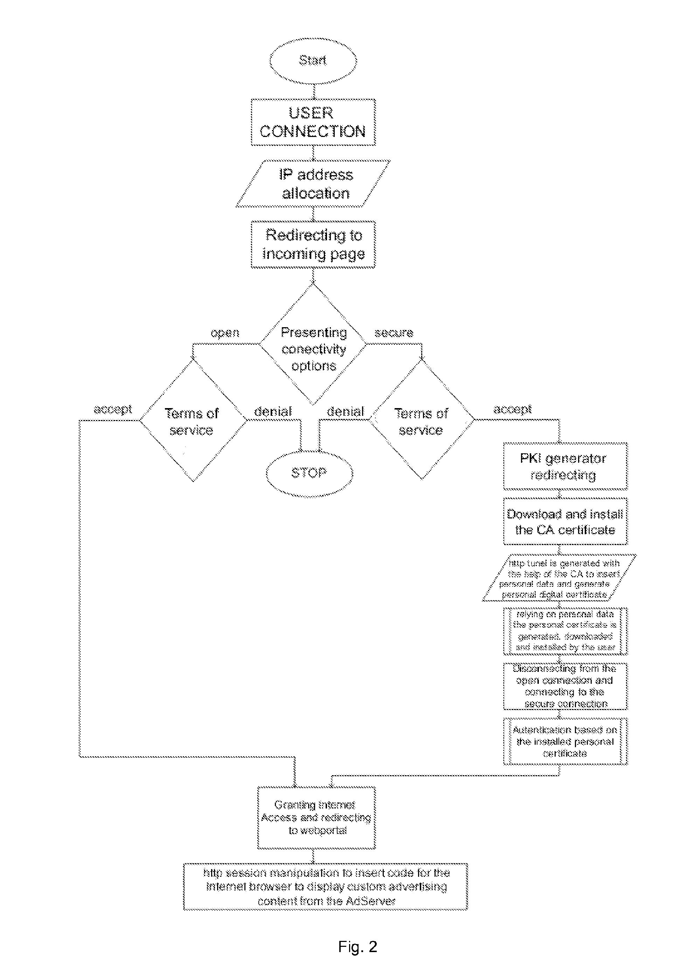

The method and system for displaying ads to the user while he uses either an unsecure or secure connection to access the Internet within coverage of a hot-spot, is described in Figure 1 through 3 main zones: Zone A, B and C, interconnected via the Internet (101) - these would be system parts.

### Practical example:

The user, owner of a personal computer type 14n (for example a DELL laptop with integrated wireless adapter) is within the coverage of a wireless hot-spot according to the invention (Zone B - hot-spot.ro).

The user turns on the laptop and, noting the operating system warning on the availability of wireless networks in Zone B [Fig. 3], starts the search interface for available wireless networks [Fig. 5] to connect and browse the Internet.

The user sees that he has sufficient signal [Fig. 5] to connect, and he chooses to connect to the network open.hot-spot.ro (WAP 122). The user's device (14n) operating system, in this example, Windows Vista notes that the network to which the user is connecting is unsecure and alerts the user on this matter [Fig. 6].

The user cannot connect to the secure.hot-spot.ro (WAP 122) because he does not have the requested certificate, but he chooses to use the unsecured connection, open.hot-spot.ro (WAP 122).

The user connects to the open.hot-spot.ro (WAP 122) and this automatically allocates a private user IP address through DHCP [Fig. 7].

The user's device operating informs the user that the connection was completed successfully and enables saving a profile for this network to be automatically connected at later times [Fig. 8].

The user chooses to save the network to be able to connect automatically in any area of coverage of the hot-spot.ro system (Zone B hot-spot.ro) [Fig. 9].

The user is notified by the operating system that he still does not have connectivity to the Internet (Zone 101) but only local connectivity WAP 122 (open.hot-spot.ro) [Fig. 10]; the user will have to accept the terms and conditions of use to get access to the Internet [Fig. 14]. At this point WAP 122 (open.hot-spot.ro) has assigned an IP address to user's device but only internally routed so that the user can not only access local addresses, hosted on WAP 122 (open.hot - spot.ro) or addresses inside the hot-spot.ro system, previously defined in the configuration files of WAP 122 (open.hot-spot.ro).

To accept the terms of use, the user opens Internet Explorer (a program for browsing the Internet, known as a web browser) [Fig. 11].

In the browser the user types a Web some address [Fig. 12] and is redirected to the login interface [Fig. 13]. At this time all requests to access an external server (15n) are intercepted by the WAP 122 (open.hot-spot.ro) and diverted to the interface of the WAP 122 (open.hot-spot.ro) that shows the user the connection page.

At this point the connection options are shown to the user [Fig. 14] and the link to the terms of service [Fig. 15]. These pages are served by WAP 122 (open.hot-spot.ro) through a virtual http server type which functions as a service of WAP 122.

When the user accepts the terms of service he is granted access to the Internet, thing confirmed by an Internet Explorer browser page [Fig. 17], and by an operating system notification [Fig. 18]. Immediately after confirming, the user is redirected to a portal that can be chosen depending on the location where the hot-spot.ro system is installed [Fig. 19]. In order to grant the user Internet access, WAP 122 (open.hot-spot.ro) adds a route to the Internet (Zone 101) for the previously assigned IP address. After adding this route, WAP 122 (open.hot-spot.ro) automatically redirects the user to a predefined website portal [Fig. 19].

After displaying the portal page [Fig. 19] the user has access to the Internet but all requests to a server in Zone C (15n) and communication sessions established by these servers are handled by the WAP 122 (open.hot-spot.ro) to insert advertising content. Thus, if the user requests to visit the www.wikipedia.org [Fig. 20] that application is handled by the WAP 122 (open.hot-spot.ro) so that:
a.) WAP 122 (open.hot-spot.ro) amends the source code of the page displayed to insert a frame of variable size, located but not limited to a location, at the top of the website page (Document Object Model or DOM manipulation), the inserted frame is limited to the content of web pages from Zone C with the purpose of distinguishing between it (the frame) and the user accessed webpage, the inserted frame hosts advertising content in relation with the user location, the type of connection used (open or secure), the page the user visits, the device used for navigation, the platform used, the resolution used, the size of the window or the language of the operating system. The advertising content within the inserted frame is brought about through AdServer (112). Each WAP part of the system has allocated an area of database stored with the AdServer (112) so that the ads shown with each WAP part of the system to be customized in real time.
b.) WAP 122 (open.hot-spot.ro) amends the source code of the page to prevent incorrect reads of the advertising content from the advertisement frame (such as but not limited to problems of "cross-site scripting").
c.) In case an advertising keyword is spotted, the AdServer (112) starts inserting code to highlight that keyword by color and underline (DOM manipulation) [Figure 3]. This highlight is done by changing the source code of the page and inserting a span tag which includes both the coloring and underlining code to color and underline the keyword and the code for displaying an advertising tooltip at mouse rollover the keyword, the advertising content is also served by the AdServer (112).

Wishing to make a bank transaction using the Internet, the user realizes that is not on a secure connection, then he types the address http://1.1.1.1 or http://exit, http://logout to disconnect from the Internet and return to the presentation page that shows options for configuring the secure connection [Fig. 21]. To be able to configure the secure connection, the user is required to agree to the terms of service once more, whereas the digital certificate to be installed will allow him to connect anytime and anywhere within the Zone B hot-spot.ro system through the WAP 121 (secure.hot-spot.ro) without needing to accept each time the terms of use.

After accepting the terms of service, the user is redirected to the configuration interface for the secure connection, page served by the Authentication and Cryptography Server System (111). Here, the user must follow the following steps:
a.) The choice of an operating system [Fig. 22] (digital certificates to be generated were the same for all operating systems but how to install and compatible extensions for each operating system in part may vary) the user choose the operating system for configuration. If the user to chooses Microsoft Windows Vista.
b.) After choosing your operating system the user must download and install the digital certificate for the Certification Authority [Fig. 23], [Fig. 24], [Fig. 25], [Fig. 26], [Fig. 27], [Fig. 28], [Fig. 29], [Fig. 30], [Fig. 31], [Fig. 32], [Fig. 33]. Installing the digital certificate results in adding the Authentication and Cryptography Server System (111) with the list of valid certificate authorities within the user's operating system. Also, this certificate is used for mutual validation, the Authentication and Cryptography Server System must present a valid certificate of authentication related to the certification authority for initiating the session user authentication. If and only if the Authentication and Cryptography Server System (111) certificate is valid, the user presents the personal digital certificate to authenticate to initiate the secure connection. Thus, it prevents the problem of presenting a personal certificate to a false server through a false WAP which is not part of the system with the purpose for data theft. The entire scheme of the secure connection procedure is in accordance with RFC 2716 "PPP EAP TLS Authentication Protocol" and can be viewed at http://tools.ieff.org/html/rfc2716.
c.) After installing the certificate authority, the user must complete a form [Fig. 34], [Fig. 35] to make an application to the Authentication and Cryptography Server System (111) to generate a personal certificate to the user. Filling this form and making the application is made using a secure website using SSL digital certificate authority installed above [Fig. 36], [Fig. 37], [Fig. 38], [Fig. 39], [Fig. 40], [Fig. 41], [Fig. 42], [Fig. 43] shown before at click to view the secure connection information [Fig. 35]. An example of form [Fig. 36] shows how the user completes the fields providing personal data which is sent using the SSL protocol to the Authentication and Cryptography Server System (111) by clicking on Send; the sent data is used to generate a unique personal certificate for the user. The system uses SSL to send the form and download the digital certificate in order to prevent data theft and compromise the digital certificate. At the time these steps are followed the user is still using an unsecure wireless connection and the only way at reach to make secure transmissions is using SSL pages.
d.) After completing the form the user downloads and installs the personal digital certificate generated by the Authentication and Cryptography Server System (111) [Fig. 36], [Fig. 37], [Fig. 38], [Fig. 39], [Fig. 40], [Fig. 41], [Fig. 42], [Fig. 43]. This digital certificate, along with the certification authority is used to create a dynamic key encryption for secure connections and secure data transfer between WAP users using EAP-TLS. The entire scheme of the procedure secure connection is in accordance with RFC 2716 "PPP EAP TLS Authentication Protocol" and can be viewed at http://tools.ietf.org/html/rfc2716. To encrypt the data traffic the system uses the above mentioned encryption keys through WPA or WPA2 encryption method TKIP or AES-CCMP. The level of encryption (WPA or WPA2) is automatically chosen depending on the hardware scope of the user's device automatically detected by WAP 121.
e.) After installing the 2 digital certificates, the user can connect to the WAP-121-secure.hot-spot.ro, the connection is automatically secured through using WPA or WPA2 encryption keys from the 2 digital certificates.

After connecting to WAP 121 (secure.hot-spot.ro) the user's device is allocated an IP address through DHCP and can save a profile to connect to the WAP 121 (secure.hot-spot.ro) [Fig. 57]. Save this profile enables automatic connection to WAP 121 (secure.hot-spot.ro) wherever it is available (Zone B).

After login, the user must open a web browser (e.g. Internet Explorer) and access any address to be connected to the Internet [Fig. 58]. At this point WAP 121 (secure.hot-spot.ro) automatically routs the user's IP address previously allocated to the Internet (Zone 101) because the terms and conditions of use have been accepted in advance [Fig. 21] (before generating digital certificates). After adding this route, WAP 121 (secure.hot-spot.ro) automatically redirects [Fig. 59] the user to a predefined website portal [Fig. 60].

After displaying the portal page [Fig. 60] the user has access to the Internet but all requests to a server in Zone C (15n) and communications sessions established by these servers are handled by the WAP 121 (secure.hot-spot.ro) to insert advertising content. Thus, if the user requests to visit www.wikipedia.org [Fig. 62] that application is handled by the WAP 121 (secure.hot-spot.ro) so that:
a.) it amends the source code of the page displayed to insert a frame of variable size, located but not limited to a location, at the top of the website page (Document Object Model or DOM manipulation), the inserted frame is limited to the content of web pages from Zone C with the purpose of distinguishing between it (the frame) and the user accessed webpage, the inserted frame hosts advertising content in relation with the user location, the type of connection used (open or secure), the page the user visits, the device used for navigation, the platform used, the resolution used, the size of the window or the language of the operating system. The advertising content within the inserted frame is brought about through AdServer (112). Each WAP part of the system has allocated an area of database stored with the AdServer (112) so that the ads shown with each WAP part of the system to be customized in real time.
b.) it amends the source code of the page to prevent incorrect reads of the advertising content from the advertisement frame (such as but not limited to problems of "cross-site scripting").
c.) In case an advertising keyword is spotted, the AdServer (112) starts inserting code to highlight that keyword by color and underline (DOM manipulation) [Figure 3]. This highlight is done by changing the source code of the page and inserting a span tag which includes both the coloring and underlining code to color and underline the keyword and the code for displaying an advertising tooltip at mouse rollover the keyword, the advertising content is also served by the AdServer (112).

## Claims

1. System to secure a wireless Internet connection to display advertising content through Wi-Fi hot-spots that provide wireless Internet connection which comprises three main subsystems: a sub-system (A) representing the data center, at least one sub-system (B) the wireless hot-spot, and sub-system (C) representing all the servers that host websites that are accessed by users in the coverage of any sub-system (B), all interconnected by a transport network for data such as Internet.

2. System according to claim 1, **characterized in that** the data center is provided with at least one Authentication and Cryptography Server System (111) used to provide the user with the authentication data in the form of digital certificates automatically generated by it, to verify the certificates authenticity when the user is connecting to the Internet through the hot-spot and to ensure the creation and maintenance of encrypted connections, the Authentication and Cryptography Server System (111) is interconnected by a network of data transmission such as the Internet to at least one Ads Server (112) which is providing the necessary support information underlying to display of ads to the user that accesses the Internet withing coverage area of a hot-spot.

3. System according to claim 1, **characterized in that** sub-system (B) contains at least one user terminal (14n) connected to the Internet, the connection type, secure on unsercure, being a matter of user's option; at least one WAP device for an unsecure connection (WAP 122), at least one WAP device for a secure connection (WAP 121), WAP devices that are used to provide the user the Wi-Fi coverage for Internet access and to intercept and rewrite the HTTP sessions, adding the advertising content provided by the Ads Server (112), which allows advertising custom content in relation with but not limited to some parameters such as user geographical location, the type of information that the user accesses, the user's terminal operating system, the connection type, the type of program for browsing the Internet (browser) or language.

4. System according to claim 3, **characterized in that** the interconnection between the WAP devices for a secure connection (WAP 121) and for an unsecure connection (WAP 122) is done through a software switch hosted on one of them and also connected to the Internet with any third party role of Internet provider (Internet Service Provider).

5. Method for securing a wireless Internet connection to display advertising content through Wi-Fi hot-spots using a wireless Internet connection, **characterized in that** with the first use of the system by a new user takes the following steps: connecting the user terminal (14n) to a WAP device for an unsecure connection (WAP 122); choosing the option for a secure connection and receive the digital certificates for authentication; the user connection to the secure.hot-spot.ro (WAP121) and secureing the connection; http handling sessions to allow users to view customized advertising content.

6. Method according to claim 5, **characterized in that** with the first use of the system by a new user the following steps occur: user checks whether he is in the coverage of the hot-spot.ro system and checks the radio signal, the user selects the connection network open.hot spot.ro (WAP122); the operating system detects the low level of network security of open.hot-spot.ro and can alert the user which selects the "Connect anyway" to proceed; the open.hot-spot.ro (WAP 122) automatically assigns the user a private IP address that allows communication between the user terminal (14n) and open.hot spot.ro (WAP122), the system displays a message confirming the connection to the open.hot-spot.ro (WAP 122), the user can save a profile for that network to connect automatically later, the operating system can display a message that notifies the user terminal that has connectivity to the network but no connectivity to the Internet; the user opens a program to browse the Internet to continue; the user types in the web browser Internet a random address to call a webpage; the user is redirected to the welcome page hosted by the open.hot-spot.ro (WAP 122) that collects data on hardware and software platform used by user terminal (14n) with the purpose of properly displaying the interface of interaction with the user of the system and to collect statistical data; 5 seconds after displaying the welcome page, open.hot-spot.ro (WAP122) displays user options for connecting with multilingual support, at which time the user can opt to continue navigating using the connection type OPEN by accepting the terms of service or may choose to use the SECURE connection.

7. Method according claim 5 and 6, **characterized in that** if the user chooses to use the secure connection with the page where he is given options to connect, it accepts the terms of service which he can read before and access to Internet is granted to generate the digital certificates for access, then the user is redirected to the configuration interface for the secure connection, page served by the Authentication and Cryptography Server System where, as a first step he must select the operating system used to allow the generation of compatible digital certificates, then he downloads the digital certificate Certification Authority stored on the server and served by the Authentication and Cryptography Server System by clicking on the linked image CA.hot spot.ro; the user accepts the installation of the digital certificate authority for the Certification Authority and the Operating System displays source and validity information of the certificate; the user completes the installation of the digital certificate for the Certification Authority with the help of the existing wizard available with the operating system on the user's terminal (14n); the user accesses the configuration interface through the secure connection button clicking on "next step" or the correspondent with language chosen by the user; the user fills out a form to make the request to the Authentication and Cryptography Server System (111), the request is made securely with a protected webpage to protect the user data, taking into account that the level of connection that is still unsecure; after completing the form, the user accesses the "send" button, or the correspondent with the language chosen by the user, using the completed form the Authentication Server System and Cryptography (111) makes a series of checks on the validity and uniqueness of data entered by the user; if the checks are completed successfully the next step occurs, if not successfully completed, the user is informed that he must correct the wrong data or choose another username if it is already used; with the next step the Authentication and Cryptography Server System (111) inserts the data into a database system and generates a unique personal digital certificate for the user; the user downloads the personal digital certificate stored and served by the Authentication and Cryptography Server System by clicking on "personal certificate" image or the correspondent with the language chosen by the user; the user accepts the installation of the digital certificate for the Certification Authority and the operating system displays information about the usefulness of the certificate; the user completes the installation of the personal digital certificate with the wizard available with operating system on the existing terminal (14n); after the digital certificate installation, the configuration interface for the secure connection confirms the successfull completion of secured connection setup and communicates the user that he can connect to the secure.hot-spot.ro (WAP121); the user checks whether he is in the coverage of the secure.hot-spot.ro (WAP121) network and the radio signal strength; the user selects the option of connecting to the secure.hot-spot.ro (WAP121) network; the user connects to the secure.hot spot. ro (WAP121) network and accepts the use of digital certificates previosly installed as autentication and securing the connection; the personal certificate, together with the certificate of the certification authority previously installed are used to create dynamic key encryption for the secure connection and secure data transfer between the secure.hot-spot.ro (WAP 121) and user terminal (14n) using EAP-TLS; the encryption level (WPA or WPA2) is automatically selected by the secure.hot-spot.ro (WAP121) depending on the hardware capabilities of user terminal; also the pair of digital certificates is used for mutual authentication of the secure.hot-spot.ro (WAP121) to the user's terminal (14n) and vice versa to prevent users connecting to a false WAP and to establish an encrypted data tunnel of communications between the user terminal (14n) and Authentication and Cryptography Server System during the transmission of authentication data; the secure.hot-spot.ro (WAP 121) automatically assigns the user a private IP address allowing communication between the user terminal (14n) and the secure.hot-spot.ro (WAP121) device; connecting the user terminal (14n) to the secure.hot-spot.ro (WAP121) successfully completes the secure connection and the user can save the profile to be able to automatically connect anywhere within the coverage are of a hot-spot.ro without needing to complete these steps again.

8. Method according to claims 5, 6 and 7, **characterized in that** after going through the stages of securing the connection, the handling of the http sessions allows the user to view customized advertising content, procedure done through the following steps: the user opens a program for browsing the Internet, and types an address to call a Web page, the user is redirected to the welcome page hosted by the secure.hot-spot.ro (WAP121) which collects data on the hardware and software platform used by user terminal (14n) for the proper display of the interaction interface with the user and to collect statistical data; the secure.hot spot.ro (WAP121) adds a route to the Internet for the IP address previously assigned to the user terminal (14n) after a time of 5 seconds the user browser will be redirected to a portal, the portal address is internally configured with the hot-spot.ro system, the operating system on the client terminal can confirm the presence of access to the Internet; the user can browse the Internet (101 ), all requests to a server in the Zone (C), (15n), and communications sessions established by these servers are intercepted and rewritten by the secure.hot-spot.ro (WAP 121) for the insertion of advertising content, such that if the user requests to visit a particular Internet address, the application and related data transfer session is intercepted and rewritten by the secure.hot-spot.ro (WAP 121) in this way: the secure.hot-spot.ro (WAP 121) amends the source code of the page displayed for inserting a frame of varying sizes, located but not limited to a location at the top of the page, the frame is inserted as defined for the content of web pages from Zone (C) to distinguish between it (the frame) and the web page accessed by the user; the inserted frame shows advertising content based on but not limited to the user location, the type of connection used (open or secure), the page the user visitst, the device used for navigation, the platform used, the resolution used, the size of the window or working language of the operating system; advertising content insertion within the frame is made through the Ads Server (112), each WAP device has allocated an area with database system hosted by the Ads Server (112) so that the ads shown on each part of the WAP system can be customized in real time; the secure.hot-spot.ro (WAP 121) changes the page's source code to prevent incorrect reads adding content from the advertisement frame; if it finds a keyword to which it can add advertising content it starts adding code to highlight the word by color and emphasis, by changing the source code of the page and inserting a "span" tag which includes code coloring and underlining the word and the code to display an advertising tooltip, served by the cross-disposal Ads Server (112), when passing the mouse over the word; the secure.hot-spot.ro (WAP 121) reads and analyzes the coded pages content and information for each webpage the user visits, to insert advertising content creating a keyword report, a script content and a structure, report that is confronted with the database hosted on the Ads Server (112); after the confrontation the secure.hot-spot.ro (WAP 121) may decide to insert, not to insert or to partially insert advertising content with certain webpages.

9. Method according to claim 8, **characterized in that** to make content advertising insertion secure.hot-spot.ro (WAP 121) uses an internal transparent proxy passing through all the pages accessed by the user, proxy which analyzes this content to insert JavaScript code, but not limited to this type, depending on the page accessed further on, this sequence of code is executed in the user browser interface and builds, by a method called DOM manipulation, the composed page, called frameset, that contains first the frame with a sequence of HTML code that relies on the mechanism of the Ads Server (112) that generates, depending on the received parameters, the predefined size of the frame, and second a frame that displays the contents of the webpage the user accesses, the frame content that displays the webpage accessed by a user can manipulate using JavaScript code, but not limited to this, in order to highlight certain keywords and to run certain code sequences that are able to but not limited to display advertising content, all the advertising content, including the frame margins or the tooltip, is stored but is not limited to this, on the Ads Server (112) or on other external sources coming from Zone C or Zone (B)(WAPs), the advertising content being asebled by the Ads Server (112) for each request, meaning for each webpage displayed from Zone C, relying on the invocation code that sent to the secure.hot-spot.ro (WAP 121), code that contains useful information for the Ads Server (112), in the assembling procedure, and to fluidize the data traffic certain advertising content portions that are accessed frequently can be stored and served by the secure.hot-spot.ro (WAP 121) buffer memory for quick display.
